Europäisches Patentamt

European Patent Office

Office européen des brevets

(19)

(11) Veröffentlichungsnummer: **0 038 086**
**A2**

(12) **EUROPÄISCHE PATENTANMELDUNG**

(21) Anmeldenummer: 81102930.5

(22) Anmeldetag: 16.04.81

(51) Int. Cl.³: **F 16 B 12/50**

(30) Priorität: 16.04.80 DE 3014507

(43) Veröffentlichungstag der Anmeldung: **21.10.81**
**Patentblatt 81/42**

(84) Benannte Vertragsstaaten: **AT BE CH DE FR GB IT LI NL SE**

(71) Anmelder: **Dr. Heinz Kluge Nachf. GmbH & Co., Wiesenstrasse 21, D-4000 Düsseldorf 11 (DE)**
Anmelder: **Schunck, Eberhard, Dipl.-Ing., Ainmillerstrasse 50, D-8000 München 40 (DE)**

(72) Erfinder: **Schunck, Eberhard, Dipl.-Ing., Ainmillerstrasse 50, D-8000 München 40 (DE)**
Erfinder: **Stoczek, Hans-Joachim, Am Moschenhof 10A, D-4000 Düsseldorf 12 (DE)**

(74) Vertreter: **Junius, Walther, Dr., Wolfstrasse 24, D-3000 Hannover 81 (DE)**

(54) **Bausatz zur Herstellung von Gestellen, Möbeln, Regalen, transportablen Bauwerken und aus diesem Bausatz hergestellter Gegenstand.**

(57) An einem Bausatz zur Herstellung von Gestellen, Möbeln, Regalen, transportablen Bauwerken und aus diesem Bausatz hergestelltem Gegenstand soll die Aufgabe gelöst werden, einen Bausatz und aus diesem Bausatz hergestellte Gegenstände zu schaffen, die mit erheblicher statischer Belastbarkeit in einfacher Weise und mit einfachen, universell verwendbaren Mitteln zusammenbaubar sind und bei dem im Querschnitt auch einfache mit wenig Aufwand herrichtbare Leisten, vorzugsweise aus Holz verwendbar sind. Die Erfindung löst diese Aufgabe dadurch, dass die Verbinder Abschnitte eines Profilstabes sind, welcher Eckschienen, zwischen denen je ein Schlitz befindlich ist, und ein zentrales Hohlrohr aufweist, das durch radial nach aussen verlaufende Wände mit dem Scheitel der Eckschienen verbunden ist, wobei die Schlitze und das Hohlrohr Ausnehmungen für das Eingreifen von Befestigungsvorrichtungen bilden, dass die Leisten mit ihren Stirnseiten stumpf gegen den Verbinder stossend angeordnet sind, dass die Leisten an ihren Stirnseiten so geformt sind und so dimensioniert sind, dass sich ihre stirnseitigen Kanten und/oder den Stirnseiten benachbarte Seitenflächen gegeneinander abstützen und dass die Befestigungsvorrichtungen einen in die Leisten eingebauten Teil aufweisen, der durch einen mittels einer Schraube anziehbaren, in den Verbinder hineingreifenden Teil spannbar ist. Hiermit entstehen Spannverbindungen, die sich durch eine sehr hohe statische Festigkeit auszeichnen.

Bausatz zur Herstellung von Gestellen, Möbeln, Regalen, transportablen Bauwerken und aus diesem Bausatz hergestellter Gegenstand

Die Erfindung betrifft einen Bausatz zur Herstellung von Gestellen, Möbeln, Regalen, transportablen Bauwerken u.a., bestehend aus mit stirnseitigen Ausnehmungen versehenen Leisten und Verbindern, die an den Verbindungsstellen als Quader sichtbar sind, sowie Befestigungsvorrichtungen und einen aus diesem Bausatz hergestellten Gegenstand.

Ein derartiger Bausatz ist durch einen Prospekt bekannt geworden. Die Verbinder sind hier Würfel, an denen Hohlrohre befestigt sind. Für den Zusammenbau von Gegenständen aus Leisten und diesen Verbindern werden sieben verschiedene Verbindersorten benötigt, je nachdem, wieviele Leisten von einem Verbinder miteinander zu verbinden sind und je nachdem, in welchen Richtungen die Leisten miteinander zu verbinden sind. Diese Vielzahl unterschiedlicher Verbinder macht deren Herstellung und Lagerhaltung teuer und aufwendig. Die Leisten selbst müssen in ihren Stirnseiten je eine im Querschnitt quadratische Ausnehmung aufweisen, weil die aus dem Würfel des Verbinders heraustehenden Hohlrohre diesen quadratischen Querschnitt aufweisen. Die Herstellung von im Querschnitt quadratischen Ausnehmungen ist schwierig, zeitaufwendig und teuer, wenn nicht die Leisten als Kunststofformstücke geformt werden, was die Leisten hinwiederum durch den Material- und Formenpreis teuer macht. Quadratische Ausnehmungen in den Stirnseiten schließen die Verwendung des natürlichen Werkstoffes Holz für die Leisten praktisch aus. Runde Ausnehmungen, wie sie sich in Stirnseiten von Holzleisten leicht einbringen lassen, wären in gemeinsamer Verwendung mit im Querschnitt quadratischen Verbinderteilen in statischer Hinsicht ausserordentlich ungünstig. Mit diesem Bausatz lassen sich hübsche Regale und auch sonstige Gegenstände herstellen. Die äussere Ansicht dieser Gegenstände gewinnt dadurch, daß die Kanten der Stirnseiten der Leisten abgeschrägt sind und somit zu dem in seinen Dimensionen gegenüber der Leistenbreite kleineren würfelförmigen Verbinder zulaufen und diesen einschließen. Diese Schrägflächen haben hier für die Statik keine Bedeutung. Nachteilig ist aber nicht nur die Vielzahl der verschiedenen Typen von Verbindern, sondern auch die Notwendigkeit, industriell vorgefertigte einheitliche Leistenstücke zu verwenden. Denn ein Handwerker kann sich die Leisten nicht selbst herstellen, weil die Herstellung von quadratischen Stirnseitenausnehmungen in Holz für den Handwerker nur sehr schwer durchführbar ist. Darüber hinaus schwächen die quadratischen Querschnitte der Verbinderhohlrohre gerade an einer für die Verbindung besonders wichtigen Stelle den Querschnitt der Leiste mehr als nötig, wodurch die Stabilität herabgesetzt wird.

Eine andere Möglichkeit zur Herstellung von Gestellen, aber auch von Ladeneinrichtungen, Verkaufsmöbeln und kleineren transportablen Bauwerken, wie Messeständen, Kiosken und dergleichen wird durch die Verwendung von Metallprofilen, vorzugsweise aus Aluminium, verwirklicht, die aus gewinkelten Eckschienen bestehen, zwischen denen je ein Schlitz befindlich ist, und die ein zentrales Hohlrohr aufweisen, das durch radial oder diagonal nach aussen verlaufende Wände mit dem Scheitel der gewinkelten Eckschienen an deren Innenseite verbunden ist. Diese Möglichkeit ist in der DE-PS 14 84 277 beschrieben. Zu der gegenseitigen Verbindung derartiger Profilabschnitte werden Befestigungsvorrichtungen in Form von T-förmig an einem Schaft ausgebildete Doppelhaken verwendet. Der Schaft dieser Befestigungsvorrichtung weist eine winkelförmige Ausnehmung auf, in die eine senkrecht zum Schaft geführte, an ihrem vorderen Ende zugespitzte Schraube eingreift, die in einen hülsenförmigen Körper eingeschraubt ist, der den Schaft des Doppelhakens umfasst. Der Schaft und die Hülse werden in das zentrale Quadrathohlrohr eines Profilstabes eingesteckt und der Doppelhaken in einen Schlitz des zu verbindenden Profilstabes eingesetzt. Durch Anziehen der Schraube wird der Schaft des Doppelhakens so weit in das

- 4 -

Quadrathohlrohr hineingezogen, bis der Doppelhaken die Eckschienen des zu verbindenden Profiles an die Stirnseite des Profiles anzieht, in
dessen Quadrathohlrohr der Schaft des Doppelhakens
eingeführt ist. Hierdurch entsteht eine relativ
feste Verbindung, die aber nicht beliebig stark
belastbar ist, weil die glatte Stirnseite eines
Profilabschnittes an den glatten Eckschienen anliegt.

Mit den Profilstäben werden auf diese Weise Rahmen und Geräte hergestellt, in deren offene, von
Profilabschnitten umrahmte Flächen während des
Zusammenbaues Platten aus verschiedenen Materialien eingesetzt werden können, die in den Schlitzen
zwischen den zwei Eckschienen einen festen und
sicheren Halt finden, aber auch mit den doppelhakenartigen Befestigungsmitteln befestigt werden können. Die auf diese Weise hergestellten
Gegenstände und Bauwerke, die aus Profilstücken,
Befestigungsvorrichtungen und Platten bestehen,
besitzen ein bestimmtes funktionales Aussehen,
das die Möglichkeit ihrer Verwendung jedoch einschränkt. Die verwendeten langen Profilstäbe sind
relativ teuer. Verbindung von stumpf gegeneinander
stoßenden Profilstäben müssen dann, wenn das Ende
eines horizontal angeordneten Profilstabes gegen
einen vertikalen Profilstab stößt, besonders fest
ausgeführt werden, da an der glatten Aussenfläche
eines Profilstabes der Haftreibkoeffizient nur
niedrig ist.

Es ist die Aufgabe der Erfindung, einen Bausatz
und aus diesem Bausatz hergestellten Gegenstände zu schaffen, die mit erheblicher statischer Belastbarkeit in einfacher Weise und mit einfachen, universell verwendbaren Mitteln zusammenbaubar sind und bei dem im Querschnitt auch einfache, mit wenig Aufwand herrichtbare Leisten, vorzugsweise aus Holz, verwendbar sind.

Zur Lösung dieser Aufgabe geht die Erfindung von der Erkenntnis aus, daß kurze Profilstababschnitte hervorragende Verbinder bilden, die zusammen mit den einen Schaft und einen Doppelhaken aufweisenden Befestigungsvorrichtungen universell verwendbare feste Verbindungen abgeben, weil durch die Befestigungsvorrichtungen in Form der Doppelhaken mit Schaft sich die vorzugsweise aus Holz gefertigten Leisten mit erheblicher Spannung an den Verbinder und die banchbarten Leisten anziehen lassen.

Die Erfindung besteht darin, daß die Verbinder Abschnitte eines Profilstabes sind, welcher Eckschienen, zwischen denen je ein Schlitz befindlich ist, und ein zentrales Hohlrohr aufweist, das durch radial nach aussen verlaufende Wände mit dem Scheitel der Eckschienen verbunden ist, wobei die Schlitze und das Hohlrohr Ausnehmungen für das Eingreifen von Befestigungsvorrichtungen bilden, daß die Leisten mit ihren Stirnseiten stumpf gegen den Verbinder stoßend angeordnet sind, daß die Leisten an ihren Stirnseiten so geformt und so dimensioniert sind, daß sich ihre stirnseitigen Kanten und/oder den Stirnseiten benachbarte Seitenflächen gegeneinander abstützen und daß die Befestigungsvorrichtungen einen in die Leisten eingebauten Teil aufweisen, der durch einen mittels einer Schraube anziehbaren, in den Verbinder hineingreifenden Teil spannbar ist.

Hiermit entstehen Spannverbindungen, die sich durch eine sehr hohe statische Festigkeit auszeichnen. Denn durch die Spannverbindung werden besonders feste Verbindungen erzielt, was insbesondere bei der Verwendung von Leisten mit ag abgeschrägten Stirnseitekanten zur Geltung kommt, wie weiter unten erläutert. Darüber hinaus wird hierbei eine Verdrehungssicherung und eine Selbstjustage durch das Spannen erzielt. Wesentlich für diese besonders feste Verbindung ist es, daß der Verbinder mindestens in einer Dimension kleiner als eine Querschnittsdimension mindestens einer an ihn angebauten Leiste ist. Dann lassen sich auch Leisten in Form von Profilstäben mit zentralem Hohlrohr zu statisch hoch belastbaren Verbindungen zusammenbauen. Es können aber auch vor allem Leisten aus preiswertem und doch gerade besonders schönem Material, vorzugsweise Holzleisten, verwendet werden, also vor allem Leisten aus vollem Material, die sich der Handwerker selbst herrichten kann, indem er lediglich Bohrungen, d.h. Löcher mit rundem Querschnitt, in die Stirnseiten der Leisten einbringt. Die benötigten Profilstababschnitte sind nur kurz und daher billig. Von ihnen wird für die Verbindung von Leisten in allen beliebigen Richtungen und in beliebiger Anzahl nur ein einziger Typ benötigt, was die Herstellung, die Lagerhaltung, die Montage und die Verwendung erleichtert. Die Befestigungsvorrichtungen sind in Massenproduktion hergestellte Teile, die ebenfalls billig sind. Da nur ein einziges Profil für die Profilstababschnitte benötigt wird und da nur zweierlei verschiedene Befestigungsvorrichtungen benötigt werden, nämlich eine in Form eines mit Schaft versehenen Doppelhakens, die in die Schlitze eingreift, und eine weitere, die in das zentrale Hohlrohr eingreift, ist die Zahl der am Lager zu haltenden Teile äusserst gering. Ein weiterer Vorteil besteht in der Austauschbarkeit von Holzleisten gegen längere Profilstäbe, so daß dem Konstrukteur oder Architekten viele Möglichkeiten der Wahl gegeben sind.

Dem Konstrukteur und Architekten bieten sich weiteren Möglichkeiten der Wahl durch die Möglichkeit, diverse Profilstäbe zu verwenden, z.B. von dreieckigem, rechteckigem, sechseckigem u.a. Querschnitt.

Es sind eine Reihe von Ausführungsformen dieses Bausatzes möglich, ohne daß andere Profilstäbe und ohne daß andere Befestigungsmittel zu verwenden sind.

Eine Ausführungsmöglichkeit besteht darin, daß horizontal anzuordnende Leisten von quadratischem Querschnitt und aus Profilstababschnitten bestehende Verbinder verwendet werden, deren Aussenflächen ebenfalls quadratisch sind und die gleichen Abmessungen wie der Leistenquerschnitt aufweisen, wenn als vertikale Leisten solche verwendet werden, die zumindest in einer Querschnittsdimension größer sind.

Eine andere Ausführungsform von höherer statischer Festigkeit besteht darin, daß die Stirnseite der Leisten um 45° abgeschrägte, ebene Kantenflächen sowie eine eine Befestigungsvorrichtung aufnehmende Zentralbohrung aufweisen und daß würfelförmige Verbinder vorgesehen sind, die in ihren Aussenabmessungen gleich den Stirnflächen der Leisten zwischen den Kantenflächen sind. Da bei dem erfindungsgemäßen Bausatz Spannverbindungen verwendet werden, legen sich beim Verspannen die abgeschrägten ebenen Kantenflächen aneinander und werden aneinander angezogen. Hierdurch stützen sich bei Belastungen die schrägen, ebenen Kantenflächen aufeinander ab und tragen dadurch einen erheblichen Teil der statischen Belastung.

Eine dritte Ausführungsmöglichkeit besteht darin, daß die aus Profilstababschnitten bestehenden Verbinder die Form eines Quaders aufweisen, dessen größte Kantenlänge der Breite der Leiste entspricht und daß die Stirnseite der Leiste an mindestens einer, vorzugsweise jedoch an zwei gegenüberliegenden Kanten eine Abschrägung oder Ausklinkung aufweist, durch die die Fläche der Stirnseite der Leiste in ihren Dimensionen gleich den Dimensionen der Aussenfläche des Verbinders ist. Bei dieser Ausführungsform stützt sich das Ende der Seitenfläche einer horizontal angeordneten Leiste gegen einen Teil der Stirnfläche einer mit ihr verbundenen vertikalen Leiste ab, so daß hier besonders hohe statische Belastbarkeiten vorhanden sind. Dabei werden die Abschrägungen oder Ausklinkungen so angeordnet, daß hier keine statischen Lasten zu tragen sind, wohl aber die Verbindung zweier horizontal angeordneter Leisten miteinander über einen Verbinder ermöglicht ist, dessen Aussenflächen kleiner als die Querschnitte der Leistensind.

Neben diesen Ausführungsformen sind noch eine Reihe von weiteren Ausführungsformen möglich, z.B. durch die Verwendung von im Querschnitt dreieckförmigen oder polygonalen Profilstäben, anderen Leistenquerschnitten als quadratischen und ähnlichem.

Bei diesem Bausatz wird man die Verbinder zweckmäßigerweise so anordnen, daß die Achse des zentralen Hohlrohres vertikal steht.

In die Schlitze der als Verbinder dienenden Profilstababschnitte wird man zweckmäßigerweise als Befestigungsvorrichtung für die Stirnseite einer Leiste am Verbinder einen T-förmig ausgebildeten Doppelhaken verwenden, dessen Schaft eine winkelförmige oder dreieckförmige Ausnehmung aufweist, in die eine an ihrem vorderen Ende zugespitzte Schraube eingreift, die in einen hüselförmigen Körper eingeschraubt ist, der den Schaft des Doppelhakens umfasst und in eine senkrecht zur Axialbohrung der Leiste verlaufende, diese durchsetzende Bohrung eingesteckt ist.

Eine andere Ausführungsform einer Befestigungsvorrichtung für eine Spannverbindung besteht darin, daß in das Hohlrohr ein hohler Schaft eingesetzt ist, der zwei Quer-bohrungen aufweist, von denen in die eine eine Schraube, in die andere zwei Kugeln eingeführt sind, während in dem axial angeordneten Hohlraum ein beidseitig angespitzter Stift oder eine Kugelreihe untergebracht ist.

Für die Befestigung der mit ihrer Achse in der Achsrichtung des Hohlrohres des Verbinders, also vorzugsweise vertikal angeordneten Leisten an den Verbindern gibt es eine Reihe von Befestigungsmöglichkeiten, die ebenfalls Spannverbindungen darstellen:

Eine besteht darin, daß die Befestigungsvorrichtung für die Stirnseite einer Leiste am Verbinder aus einer in das zentrale Hohlrohr eingesetzten und befestigten Hülse, die vorzugsweise geklebt, verstiftet oder mit einer radial durch eine Wand des Hohlrohres eingeführten Schraube befestigt ist und einer die Hülse axial durchsetzenden, in die Stirnseite der Leiste eingreifenden Schraube besteht.

Eine andere Möglichkeit besteht darin, daß in das zentrale Hohlrohr ein Schaft mit einer dreieckförmigen Ausnehmung eingesteckt ist, die auch für die Aufnahme einer Mutter dient, in die eine an ihrem unteren Ende zugespitzte Schraube eingeschraubt ist, deren Spitze gegen die dreieckförmige Ausnehmung drückt.

In die Axialbohrung der Stirnseite der Leiste wird für diese Befestigungen eine Muffe eingeschraubt, die ein Aussen- und ein Innengewinde aufweist. In das Innengewinde wird eine Schraube eingeschraubt, die entweder mit einem Kopf ver-

0038086

sehen ist oder einen das Hohlrohr ausfüllenden
Stift aufweist, der mittels einer Schraube,
eines Bolzens oder mittels Stiften in diesem
Hohlrohr befestigt wird.

Eine sehr einfache Befestigungsmöglichkeit
für eine in das Hohlrohr gesteckte, in die
Axialbohrung der Leiste eingreifende Schraube
lässt sich dadurch herstellen, daß das zentrale
Hohlrohr des den Verbinder bildenden Profilstababschnittes um ein Stück, d.h. nicht in voller
Tiefe, aufgebohrt wird, wodurch im Inneren des
Hohlrohres ein Absatz entsteht, Der Schraubenkopf kann dann hinter diesen Absatz fassen. Besonders sicher ist diese Befestigungsmöglichkeit, wenn zwischen den Absatz und den Schraubenkopf eine Ringscheibe eingelegt ist, deren Aussendurchmesser dem Innendurchmesser der Bohrung entspricht.

Eine weitere Art der Befestigung besteht darin,
daß die Hülse in das Hohlrohr eingesetzt und
verstiftet wird. Hierbei ist es möglich, in der
Schraube eine Ringnut vorzusehen, in die ein
Stift oder eine Klammer eingreift, die in Löcher
des Hohlrohres und Ausnehmungen der Hülse eingesetzt sind.

Das Wesen der vorliegenden Erfindung ist nachstehend anhand von in der Zeichnung schematisch
dargestellten Ausführungsbeispielen näher erläutert. Es zeigen:

Fig. 1 eine Ansicht eines auf den Bausatz zusammengesetzten Gestells, auf der rechten
        Seite teilweise im Schnitt;

0038086

- 12 -

Fig. 2 einen Querschnitt durch den Verbinder;

Fig. 3 eine Ansicht des Doppelhakens;

Fig. 4 einen Querschnitt durch den hülsenförmigen Körper;

Fig. 5 ein Zusammenbauschema der Teile der Fig. 2 bis 4;

Fig. 6 eine andere Ausführungsform der Verbindung mit einem quaderförmigen Verbinder in Seitenansicht;

Fig. 7 in Ansicht von oben;

Fig. 8 eine Möglichkeit der Verbindung mehrerer Leisten in einer Ebene an einem Verbinder dieser Art;

Fig. 9 eine andere Möglichkeit der Ausführung der Verbindung mehrerer in einer Ebene liegender Leisten mit einem quaderförmigen Verbinder;

Fig.10 eine weitere Ausführungsform einer Befestigungsvorrichtung im Querschnitt vor der Befestigung;

Fig.11 nach der Befestigung;

Fig.12 in Ansicht von oben;

Fig.13 eine ähnlich ausgebildete Befestigungsvorrichtung für eine zweiseitige Befestigung;

Fig.14 einen Querschnitt durch einen Verbinder, in dessen Hohlrohr eine Hülse eingebaut ist;

Fig.15 einen Querschnitt durch einen Verbinder, in dessen Hohlror ein Absatz ausgebildet ist;

Fig.16 einen Querschnitt durch einen Verbinder, in dessen Hohlrohr eine Hülse eingebaut ist, die durch zwei Stifte festgesetzt ist;

Fig.17 einen Querschnitt durch eine weitere
Ausführungsform einer Verbindung
mehrerer Leisten miteinander.

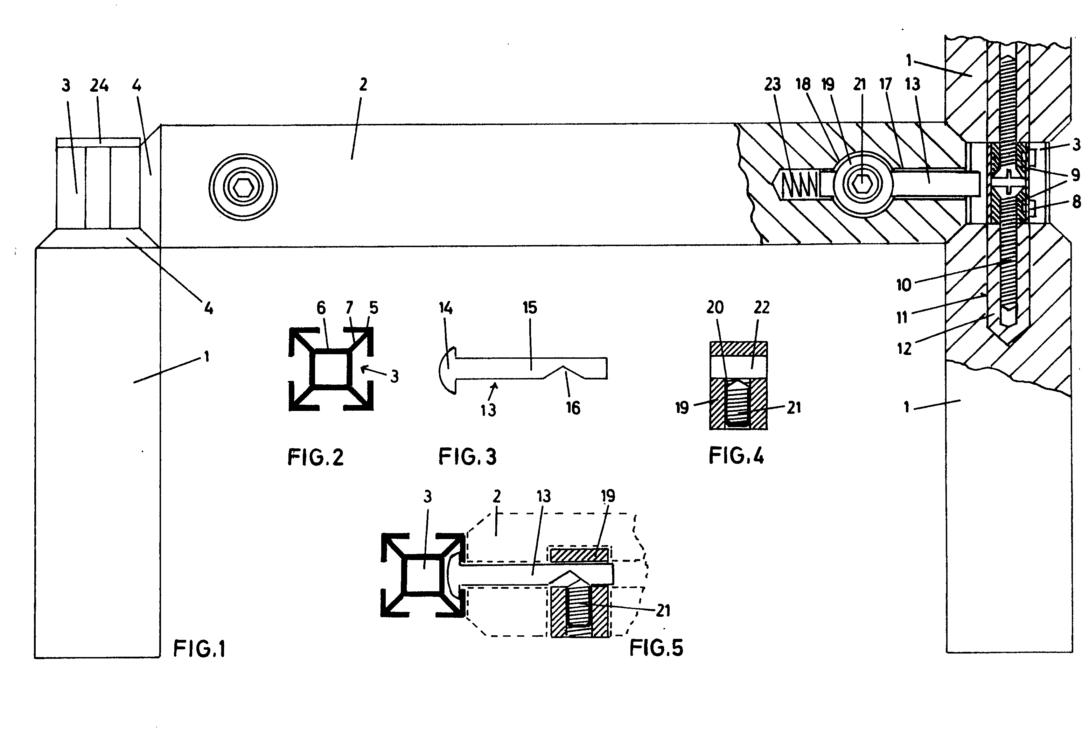

Das Gestell der Fig. 1 ist aus vier Leisten
1,2 und zwei Verbindern 3 zusammengesetzt. Die
Leisten 1 dienen hierbei als Füße, während die
Leiste 2 zwei Füße miteinander verbindet. Die
Kanten der Stirnseiten aller Leisten 1,2 weisen
eine Abschrägung um 45° auf, durch die Flächen
4 gebildet sind. Mit diesen Flächen 4 stoßen
die Leisten 1 und 2 direkt aneinander. Diese
Flächen 4 bewirken durch die Spannverbindung
eine hohe Torsionssteifigkeit und die Möglichkeit einer Übertragung statischer Lasten von der
Leiste 2 direkt auf die Leiste 1.

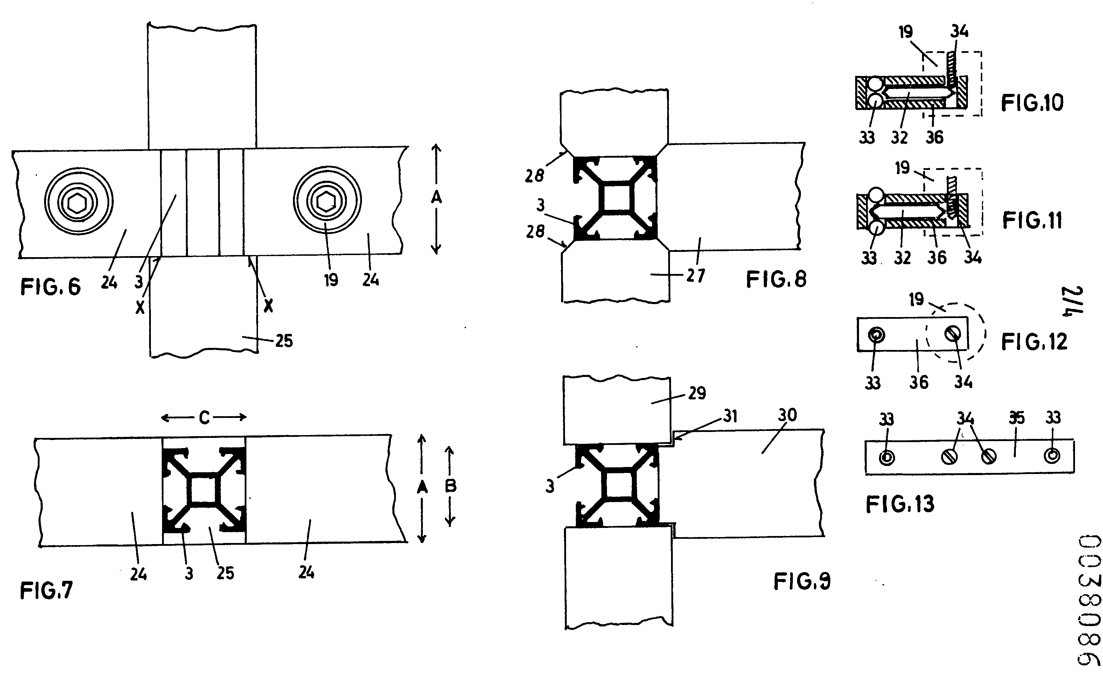

Die Verbinder 3 sind aus Metall gefertigte Profilleistenstücke, deren Querschnittsprofil in
Fig. 2 und 7 dargestellt ist. Diese Profilleistenstücke sind auf eine solche Länge abgeschnitten,
daß die Länge gleich der Breite und gleich der
Höhe ist, so daß die als Profilleistenstücke
hergestellten Verbinder 3 würfelförmig sind.
Dabei sind Länge und Breite und Höhe des Verbinders 3 derart gewählt, daß Länge und Breite gleich
der Länge und Breite der Stirnfläche der Leisten
1 und 2 sind, also der Flächen, die innerhalb
der Schrägflächen 4 liegen.

Das Profil der Verbinder 3 besteht aus vier
Eckschienen 5 und einem zentralen, im Querschnitt
quadratischen Hohlrohr 6, das über Wände 7 mit
den vier gewinkelten Eckschienen verbunden ist, wobei diese Wände 7 in einer Verlängerung der Diagonalen des Quadrathohlrohres 6 verlaufen. Derartige Profile werden als Profilstäbe im Strangpreßverfahren hergestellt.

Die Verbindung der Leisten 1 mit dem Verbinder 3 erfolgt dadurch, daß in das Innere des Quadrathohlrohres 6 Muffen 9 eingesetzt sind, deren Querschnitt aussen quadratisch und innen rund ist. Diese Muffen 9 werden mittels Schrauben 8 befestigt, die durch senkrecht zur Längsachse des Profiles eingeschraubte Schrauben 8 gehalten werden. Zu diesem Zweck wird durch die Wandung des Quadrathohlrohres 6 ein Loch gebohrt, ebenfalls wird durch die Wandung der Muffe 9 ein Loch gebohrt und dieses wird zweckmäßigerweise mit Gewinde versehen. In die auf diese Weise befestigte Muffe 9 wird eine Schraube 10 eingesetzt, die in eine Bohrung 11 der Stirnseite der Leiste 1 eingeführt ist. Damit diese Schraube 10 einen besseren Halt bietet, ist es zweckmäßig, in die Bohrung 11 entweder einen Dübel einzusetzen oder eine Muffe einzusetzen, die innen ein Schraubgewinde für Maschinenschrauben aufweist, während sie aussen ein Holzschraubengewinde aufweist. Anstelle des Dübels 12 oder der Mutter 12 können auch andere Befestigungsmittel vorgesehen werden, in die eine Schraube einschraubbar ist.

Bei der Montage geht man zweckmäßigerweise so vor, daß man zuerst eine Hülse 9 mittels der Schraube 8 in dem Quadrathohlrohr 6 befestigt, anschließend eine Schraube 10 durch die Hülse 9 hindurchsteckt und diese Schraube 10 mit der Leiste 1 bzw. der Mutter 12 verschraubt. Will man dann

eine weitere Leiste 1 an demselben Verbinder 3 befestigen, geht man folgendermaßen vor: Man schraubt mittels der Schraube 10 zuerst die Quadrat-Muffe 9 auf der Leiste 1 fest und steckt dann die Leiste mit der Muffe 9 in das Quadrathohlrohr 6 und spannt dieses dann mittels der Schraube 8 am Verbinder 3 fest. Damit hier eine richtige Ausrichtung der Leiste 1 gegenüber dem Verbinder 3 erfolgt, derart, daß die Aussenseiten der Leiste 1 parallel zu den Aussenseiten des Verbinders 3 verlaufen, ist es zweckmäßig, wenn in der Stirnseite der Leiste 1 eine Fräsung mit zwei parallel zueinander und parallel zu den Aussenseiten der Leiste 1 verlaufenden Kanten vorgesehen ist. Durch diese Ausfräsung werden dann die Aussenwandungen der Quadrathülse 9 parallel zu den Aussenseiten der Leiste 1 festgelegt. Damit wird dann auch die Lage des Verbinders 3 derart festgelegt, daß dessen Aussenseiten parallel zu den Aussenseiten der Leiste 1 liegen.

Die Verbindung der Leiste 2 mit dem Verbinder 3 erfolgt auf eine andere Weise: Hier wird ein Doppelhakten 13 für die Befestigung verwendet, der aus einem Kopf 14 und einem Schaft 15 besteht. Der Schaft 15 weist eine im Querschnitt dreieckförmige Ausnehmung 16 auf, die zum Spannen dient. Dieser Doppelhaken 13 wird in eine Axialbohrung 17 eingesetzt. Quer zu dieser Axialbohrung verläuft eine Bohrung 18, die die Axialbohrung 17 schneidet. Diese Bohrung 18 weist einen größeren Durchmesser auf. In sie wird ein hülsenförmiger Körper 19 eingesetzt, der eine Axialbohrung 20 mit Gewinde für die Aufnahme einer Schraube 21, die vorzugsweise als Gewindestift mit Innensechskant und Spitze ausgebildet

·ist, aufweist. Quer durch diesen hülsenförmigen Körper 19 verläuft eine Bohrung 22, durch die der Schaft 15 des Doppelhakens 13 gesteckt wird. Dabei werden die Abmessungen der einzelnen Bohrungen und Teile zueinander so gewählt, daß die Schraube 21 als Spannschraube in die dreieckförmige Ausnehmung 16 eingreift. Beim Hineinschrauben der Schraube 21 drückt deren konische Unterkante gegen die eine Fläche der dreieckförmigen Ausnehmung 16 und bewegt damit den Schaft innerhalb der Bohrung 17. Die Abmessungen werden so vorgenommen, daß die Schraube 21 auf die dem Kopf 14 abgewandte Schrägfläche der dreieckförmigen Ausnehmung 16 drückt, so daß beim Einschrauben der Schraube 21 in den hülsenförmigen Körper 19 der Kopf 14 in Richtung der Stirnseite der Leiste 2 angezogen wird.

Der Kopf 14 ist so ausgebildet, daß er in den Hohlraum zwischen zwei rechtwinkligen Eckschienen 5 hineingreift und mit jedem seiner beiden gegenüberliegenden Haken an die Rückseite einer Eckschiene 5 anzuliegen kommt. In der Bohrung 17 ist dann noch eine Feder 23 eingelegt, die gegen die dem Kopf 14 abgewandte Stirnseite des Schaftes 15 drückt. Mittels dieser Feder 23 wird der Schaft 15 nach aussen gedrückt, so daß die Montage, ebenso wie eine Demontage, erleichtert wird. Dort, wo an die Stirnseite des Verbinders 3 keine weitere Leiste 1 angebaut wird, kann diese Stirnseite durch eine Abdeckplatte 24 abgedeckt werden.

Während im Ausführungsbeispiel der Fig. 1 bis 5 der aus einem Profilstababschnitt bestehende Verbinder 3 die Form eines Würfels hat, bei dem die Kantenlängen gleich lang sind, ist in dem Ausführungsbeispiel der Fig. 6 bis 9 als Verbinder ein Profilstababschnitt genommen, dessen Kantenlängen ungleich lang sind, dessen Form somit die Form eines Quaders hat. Und zwar sind hier die beiden senkrecht zur Achse des Hohlrohres liegenden Abmessungen des Verbinders gleich lang und kürzer als die in Achsenrichtung des Hohlrohres liegende Dimension. Diese Dimension A entspricht exakt der Breite der Seitenflächen der einen quadratischen Querschnitt aufweisenden Leisten 24,25. Die Dimensionen B des Verbinders sind gleich lang und kleiner als die Dimension A. Wie aus Fig. 6 zu ersehen ist, liegen an den Stellen X die Leisten 24 mit dem Ende ihrer Seitenflächen auf einem Teil der Stirnfläche der Leiste 25 auf. Fig. 7 zeigt eine Ansicht von oben, nachdem die obere Leiste 25 entfernt ist. In Fig. 8 ist für diese Ausführungsform eine Verbindung von drei Leisten 27 miteinander in einer Ebene dargestellt. Hier weist jede Stirnseite der Leisten 27 eine Abschrägung 28 auf zwei gegenüberliegenden Seiten auf. Die beiden anderen, einander gegenüberliegenden Seiten hingegen weisen keine solche Abschrägung auf. Im Ausführungsbeispiel der Fig. 9 weisen zwei Leisten 29 an ihren Stirnseiten keinerlei Bearbeitungen auf, die dritte Leiste 30 hingegen weist zwei Ausklinkungen 31 auf. Diese Ausführungsformen können weiter abgewandelt werden, z.B. dadurch, daß jede Leiste nur eine Ausklinkung aufweist.

In den Fig. 10 bis 12 ist eine andere Befestigungsvorrichtung dargestellt: In einem Stift von vorzugsweise quadratischem Querschnitt befindet sich eine Axialbohrung, in der ein runder, zu beiden Seiten angespitzter Stift 32 untergebracht ist. Diese Axialbohrung endet in zwei Querbohrungen, von denen sich in einer zwei Kugeln 33 in der anderen eine am Ende zugespitzte Schraube 34 befindet. Diese Schraube ist in einem hülsenförmigen Körper 19 einschraubbar, der die gleichen Abmessungen wie der hülsenförmige Körper 19 in Fig. 4 aufweist. In Fig. 10 befinden sich die beiden Kugeln 33 in der Bohrung, während die Schraube 34 noch nicht in ihre Bohrung eingeschraubt ist. In dieser Stellung kann die Befestigungsvorrichtung in den Schlitz zwischen den Ecksäulen 5 eingeschoben werden. In Fig. 11 ist dargestellt, wie nach dem Einschrauben der Schraube 34 mit Hilfe des beidseitig angespitzten Stifte 32 die Kugeln 33 nach aussen gedrückt sind, wodurch eine Festklemmung erzielt wird. In Fig. 12 ist eine *sicht von oben auf diese Befestigungsvorrichtung gezeigt.

Die Befestigungsvorrichtung der Fig. 13 besteht aus zwei Befestigungsvorrichtungen der Fig. 12, die in einem Stift 35 untergebracht sind. Dieser Stift 35 weist die doppelte Länge oder eine vielfache Länge des Stiftes 36 der Fig. 10 bis 12 auf.

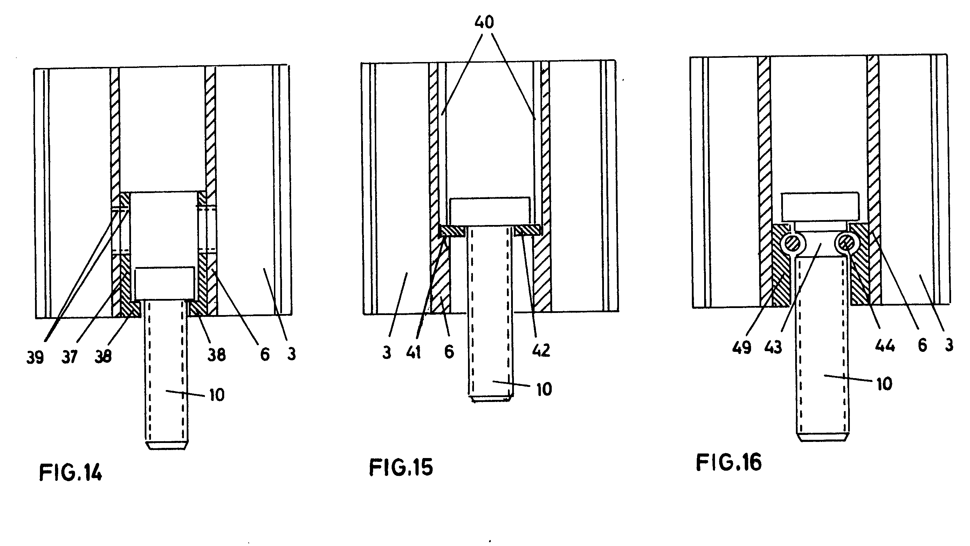

In den Fig. 14 bis 16 sind verschiedene Möglichkeiten der Befestigung einer Schraube 10 in einem Verbinder 3 dargestellt:

In Fig. 14 ist in den Verbinder 3 eine Hülse 37 eingeklebt, die an ihrem unteren Ende einen Absatz 38 aufweist. Diese Hülse 37 kann in das Hohlrohr 6 des Verbinders eingeklebt sein, diese Hülse kann aber auch verstiftet sein oder durch einen Bolzen, der durch die Löcher 39 gesteckt bzw. in ein in diese Löcher 39 eingeschnittenes Gewinde eingeschraubt ist, gehalten sein. Im Ausführungsbeispiel der Fig. 15 ist das Hohlrohr 6 im oberen Teil ausgebohrt, so daß es hier einen im wesentlichen runden Querschnitt aufweist, der aber vier nach aussen weisende Nuten 40 hat, die als Ecken des früheren quadratischen Hohlprofiles stehengeblieben sind. Durch das Ausbohren ist ein Absatz 41 gebildet, auf den eine Ringscheibe 42 gelegt ist, dessen Aussendurchmesser dem Innendurchmesser der Bohrung im Hohlrohr 6 entspricht und dessen Innendurchmesser dem Aussendurchmesser des Schraubenschaftes entspricht.

Eine weitere Möglichkeit ist in Fig. 16 gezeigt. Hier ist wiederum eine Hülse 49 in das Hohlrohr 6 eingebaut. Die Schraube 10 weist in der Nähe ihres Kopfes eine Ringnut 43 auf, in die zwei Stifte 44 eingreifen, die in Löcher des zentralen Hohlrohres 6 gesteckt sind, die sich in die Hülse fortsetzen und in deren Innenwand an gegenüberliegenden Stellen Ausnehmungen bilden und die genannten Ausnehmungen durchsetzen.

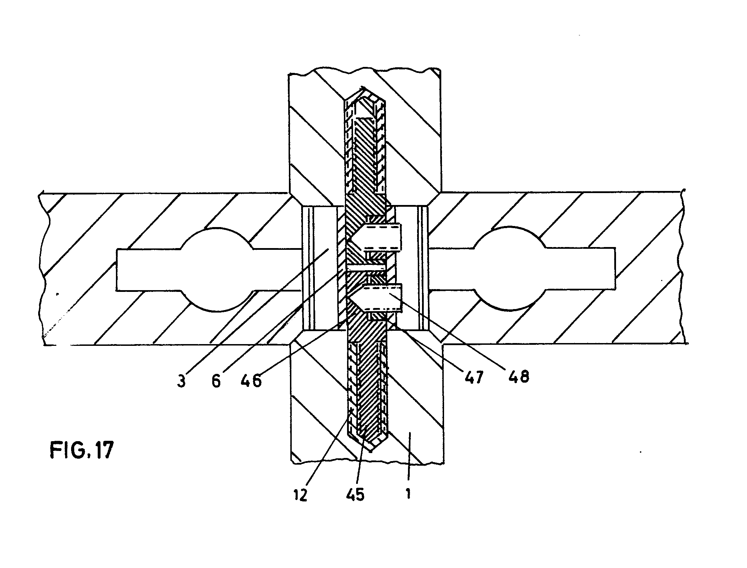

In Fig. 17 ist eine weitere Befestigungsmöglichkeit gezeigt: In die Muffe 12 mit Innen-und Aussengewinde ist ein Gewindestift 45 eingeschraubt, der in einen breiteren Teil von vorzugsweise quadratischem Querschnitt 46 übergeht. Dieser breitere Teil weist eine Ausnehmung auf, die in ihrem rechten Teil für die Aufnahme einer Vierkantmutter 47 ausgebildet ist und in seinem linken Teil eine dreieckförmige Ausnehmung hat, ähnlich wie die Ausnehmung 16 des Schaftes 15 des Doppelhakens 14. In die Mutter 47 ist eine an ihrem Ende zugespitzte Schraube 48 eingeschraubt, deren Spitze in die dreieckförmige Ausnehmung eingreift, wodurch ein Hineinziehen des Stiftes 45,46 in das Hohlrohr 6 des Verbinders 3 erreicht wird. Dabei durchsetzt die Schraube 48 ein in die Wandung des Hohlrohres 6 eingebohrtes Loch. Die Mutter 47 wird durch die Wandung des Hohlrohres 6 und durch die Innenwandungen der Ausnehmung in dem Stiftteil 46 in ihrer Stellung unverdrehbar und unverrückbar gehalten. Die Vierkantmutter 47 ist dabei nur durch zwei Kanten der Ausnehmung gehalten, die parallel zur Bewegungsrichtung des Stiftes 45,46 liegen. An diesen Kanten liegt die Vierkantmutter an. Die beiden anderen Seiten der Vierkantmutter liegen mit Spiel in der Ausnehmung, so daß bei unverrückbarer Lage der Mutter relativ zum Hohlrohr 6 eine Verschiebung des Stiftes 45,46 erzielt werden kann. Auch hier sind eine Reihe von Abwandlungsmöglichkeiten vorhanden.

Durch einfache Montage der zu diesem Bausatz gehörenden Teile entsteht der Gegenstand dieser Erfindung.

- 1 -

Patentansprüche:

1. Bausatz zur Herstellung von Gestellen, Möbeln, Regalen, transportablen Bauwerken u.a., bestehend aus Leisten mit stirnseitigen Ausnehmungen und Verbindern, die an den Verbindungsstellen als Quader sichtbar sind, sowie Befestigungsvorrichtungen und aus diesem Bausatz hergestellter Gegenstand, dadurch gekennzeichnet, daß die Verbinder (3) Abschnitte eines Profilstabes sind, welcher Eckschienen (5), zwischen denen je ein Schlitz befindlich ist, und ein zentrales Hohlrohr (6) aufweist, das durch radial nach aussen verlaufende Wände (7) mit dem Scheitel der Eckschienen (5) verbunden ist, wobei die Schlitze und das Hohlrohr Ausnehmungen für das Eingreifen von Befestigungsvorrichtungen bilden, daß die Leisten mit ihren Stirnseiten stumpf gegen den Verbinder stoßend angeordnet sind, daß die Leisten an ihren Stirnseiten so geformt und so dimensioniert sind, daß sich ihre stirnseitigen Kanten und/oder den Stirnseiten benachbarte Seitenflächen gegeneinander abstützen und daß die Befestigungsvorrichtungen einen in die Leisten (1,2) eingebauten Teil aufweisen, der durch einen mittels einer Schraube anziehbaren, in den Verbinder (3) hineingrefenden Teil spannbar ist.

2. Bausatz nach Anspruch 1, dadurch gekennzeichnet, daß die Ausnehmungen (1) in den Stirnseiten der Leisten (1,2) Bohrungen sind.

3. Bausatz nach Anspruch 1,
dadurch gekennzeichnet,
daß die Befestigungsvorrichtung für die
Stirnseite einer Leiste (2) am Verbinder ein
T-förmig ausgebildeter Doppelhaken (13) ist,
dessen Schaft (15) eine winkelförmige oder
dreieckförmige Ausnehmung (16) aufweist, in
die eine an ihrem vorderen Ende zugespitzte
Schraube (21) eingreift, die in einen hülsenförmigen Körper (19) eingeschraubt ist, der
den Schaft (15) des Doppelhakens (13) umfasst
und in eine senkrecht zur Axialbohrung (17) der
Leiste (2) verlaufende, diese durchsetzende
Bohrung (18) eingesteckt ist.

4. Bausatz nach Anspruch 1,
dadurch gekennzeichnet,
daß die Befestigungsvorrichtung für die Stirnseite einer Leiste (1) am Verbinder (3) aus
einer in das zentrale Hohlrohr (6) eingesetzten
und befestigten Hülse (9) und einer die Hülse
(9) axial durchsetzenden, in die Stirnseite
der Leiste (1) eingreifenden Schraube (10) besteht.

5. Bausatz nach Anspruch 4,
dadurch gekennzeichnet,
daß die Hülse mit einer radial durch eine
Wand des Hohlrohres (6) eingeführten Schraube
(8) befestigt ist.

6. Bausatz nach Anspruch 1 oder 4,
dadurch gekennzeichnet,
daß in die Bohrung (11) der Stirnseite der Leiste (1) eine Hülse (12) mit Innengewinde
oder ein Dübel eingesetzt ist, in die die
Muffe (9) im Quadrathohlrohr (6) durchsetzende Schraube (10) einschraubbar ist.

7. Bausatz nach Anspruch 6,
dadurch gekennzeichnet,
daß das zentrale Hohlrohr (6) quadratisch ist
und daß die eingesetzte und befestigte Hülse
(9) einen quadratischen Aussenumfang aufweist.

8, Bausatz nach Anspruch 7,
dadurch gekennzeichnet,
daß die in das zentrale Hohlrohr (6) eingesetzte Hülse (9) mit quadratischem Aussenumfang aus dem Quadrathohlrohr (6) heraussteht
und daß in die Stirnseite der Leiste (1) mittig
ein Schlitz von der Breite der Hülse (9) eingelassen ist, dessen Kanten parallel zu den Seitenflächen der Leiste (1) verlaufen.

9. Bausatz nach Anspruch 1,
dadurch gekennzeichnet,
daß die Befestigungsvorrichtung für die Stirnseite einer Leiste (1) am Verbinder (3) aus einer
Schraube (10) besteht, die in die Stirnseite
der Leiste (1) eingreift und deren Kopf hinter
einen in dem Hohlrohr (6) des Verbinders befindlichen Absatz (38,41) greift.

10. Bausatz nach Anspruch 9,
dadurch gekennzeichnet,
daß zwischen dem Absatz (41) im Hohlrohr (6)
und dem Kopf der Schraube (10) eine Scheibe
(42) eingelegt ist.

11. Bausatz nach Anspruch 3,
    dadurch gekennzeichnet,
    daß die Schraube (10) unterhalb ihres Kopfes
    im Schaft eine Ringnut (43) aufweist, in die
    ein Stift oder eine Klammer (44) eingreift,
    die in Löcher des Hohlrohres (6) eingesetzt
    sind.

12. Bausatz nach Anspruch 1,
    dadurch gekennzeichnet,
    daß die Stirnseiten der Leisten (1,2) um 45$^{o}$
    abgeschrägte, ebene Kantenflächen (4) sowie
    eine eine Befestigungsvorrichtung aufnehmende
    Zentralbohrung (11,17) aufweisen.

13. Bausatz nach Anspruch 12,
    dadurch gekennzeichnet,
    daß in ihren Aussenabmessungen würfelförmige
    Verbinder (3) vorgesehen sind, die mit Ausnehmungen für das Eingreifen der Befestigungsvorrichtungen versehen sind.

14. Bausatz nach Anspruch 10,
    dadurch gekennzeichnet,
    daß die Aussenabmessungen der Kanten der Ver-
    binder (3) den Abmessungen der Stirnflächen der
    Leisten (1,2) zwischen den abgeschrägten Flächen (4) entsprechen.

15. Bausatz nach Anspruch 1,
    dadurch gekennzeichnet,
    daß der Verbinder die Form eines Quaders aufweist, dessen größte Kantenlänge der Breite
    der Leiste (24) entspricht und
    daß die Stirnseite der Leiste an mindestens einer, vorzugsweise aber an zwei gegenüberliegenden Kanten eine Abschrägung (28) oder
Ausklinkung (31) aufweist.

16. Bausatz nach Anspruch 15,
dadurch gekennzeichnet,
daß bei Vorhandensein von zwei Abschrägungen
(28) oder Ausklinkungen (31) die Fläche der
Stirnseite der Leiste (27,30) in ihren Dimensionen gleich den Dimensionen der an der Leiste anliegenden Aussenfläche des Verbinders ist.

17. Bausatz nach Anspruch 1,
dadurch gekennzeichnet,
daß der Verbinder (36) aus einem Vierkantstift
besteht, der eine Axialbohrung aufweist, in
der ein beidseitig angespitzter Stift (32)
oder eine Reihe von Kugeln untergebracht sind,
und der zwei Querbohrungen aufweist, in deren
einer eine am Ende zugespitzte Schraube (34)
eingeschraubt ist und in deren anderer Querfohrung zwei Kugeln (33) eingelegt sind, die,
wenn sie ausser Berührung mit dem Stift sind,
nicht aus der Querbohrung hervortreten.

18. Bausatz nach Anspruch 1,
dadurch gekennzeichnet,
daß als Verbinder ein Stift dient, dessen einer
Teil (45) ein Gewinde aufweist und dessen anderer
Teil im Querschnitt die Querschnittsform des
Hohlrohres (6) aufweist und in diesem Teil eine
Ausnehmung hat, in die eine Vierkantmutter (47)
eingelegt ist und die eine im Querschnitt dreieckförmige Ausnehmung aufweist, in die die am

0038086

- 6 -

Ende zugespitzte Schraube (48) hineingreift, die in die Vierkantmutter (47)
eingeschraubt ist und die durch ein Loch in
dem Hohlrohr (6) hindurchgreift.

3  9  8

1  13  21  17  23  18  19

10  11  12

1

2

4  24  3

**FIG.1**

5  7  6

3

**FIG.2**

15  16  14  13

**FIG.3**

22  20  19  21

**FIG.4**

19  13  2  3  21

**FIG.5**

FIG.6

FIG.7

FIG.8

FIG.9

FIG.10

FIG.11

FIG.12

FIG.13

2/4

0038086

FIG.14

39 37 38 38 6 3

10

FIG.15

40

3 41 6 42

10

FIG.16

49 43 44 6 3

10

0038086

FIG.17